# EUROPEAN PATENT SPECIFICATION

(11) **EP 0 787 600 B1**
(45) Date of publication and mention of the grant of the patent: **29.08.2001**
(21) Application number: 97101277.8
(22) Date of filing: 28.01.1997
(51) Int. Cl.: B60C 11/04, B60C 11/11, B60C 11/00, B60C 1/00, B60C 11/13

(54) **A tire having good diverse properties**
Reifen mit guten verschiedenen Eigenschaften
Bandage pneumatique ayant de bonnes propriétés diverses

(30) Priority: 05.02.1996 US 597077
(43) Date of publication of application: 06.08.1997
(73) Proprietor: THE GOODYEAR TIRE & RUBBER COMPANY, Akron, Ohio 44316-0001 (US)
(72) Inventor: Hubbell, David Ray, Hartville, OH 44632 (US); Nowacki, Marc Christopher, Uniontown, OH 44685 (US); Sevart, Jeffrey Leon, Broadway Heights, OH 44147 (US)
(74) Representative: Leitz, Paul

(56) References cited:
- EP-A- 0 246 995
- EP-A- 0 627 332
- US-A- 4 619 300
- US-A- 5 132 357

## Description

### Background of the Invention

The invention relates to pneumatic tires for use on automobiles and light trucks.

In the art, tires are designed for a specific purpose, and tires designed for one purpose very often have poor properties when used for another purpose. For example, tires designed specifically for use in snow are noisy and often provide a rough ride when used on dry pavement. Similarly, tires that are designed to be quiet, often have poor traction properties in wet conditions.

Since tires are used in a broad range of conditions, and there is an increasing demand that tires run quietly, it is a continuing goal in the art to maximize all properties of a tire.

It is the object of this invention to provide a tire which is quiet, has good handling properties, good wear properties, good all season traction qualities (wet, dry and snow), good gas mileage, and provides a smooth ride, all in a combination of excellence that has never, heretofore, been achieved.

### Summary of the Invention

These objects are met in the tire according to the appended claims.

Tire treads, for retreading, can be provided having the parameters and characteristics defined with respect to the tire of the invention.

### Brief Description of the Drawings

**Fig. 1** illustrates a cross section of the tire of the invention.

**Fig. 2** illustrates a tread section of the tire of the invention.

**Fig. 3** illustrates a cut away side view of a block of the tire illustrating a sipe undercut.

**Fig. 4** illustrates an exploded view of a tire and the mini-wings therein.

**Fig. 5** illustrates the desired footprint shape for the tire of the invention.

**Fig. 6** is a plan view of the portion of the tire tread illustrated in Fig. 2, and Fig. 6A is a cross section of the tread taken along line 6A-6A of Fig. 6.

### Detailed Description of the Invention

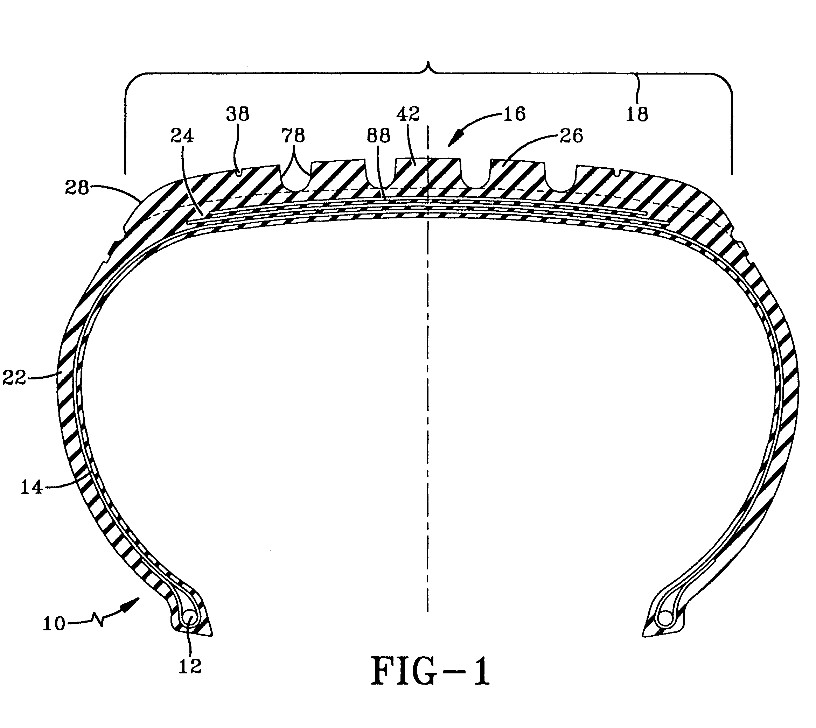

With reference now to Fig. 1, a cross-section of tire 10 of the invention shows parallel annular beads 12, at least one carcass ply 14 wrapped around beads 12, tread 16 disposed over carcass ply 14 in a crown area 18 of the tire, and sidewalls 22 disposed between the tread 16 and the beads 12.

In the tire 10 of the invention, tread 16 comprises a tread base 24 and a tread cap 26. Tread base 24 and tread cap 26 work together to give the tread flexibility and rebound properties that enhance the wear, mileage, handling and traction properties described for the tire.

Tread base 24 comprises a natural rubber composition that has a 300% modulus of 16 to 19 MPa, a tensile strength at break of 17.5 to 22.5 MPa, elongation at break of 270 to 435%, RT (room temperature) rebound of 57 to 64, a tan delta at 10% strain and 100° C of 0.075 to 0.11, G' at 1% strain of 1770 to 2070 KPa, a G' at 50% strain of 790 to 1010 KPa, and an E' of 10⁻³ to 1,3 x 10⁶ kg/m² (0.1 to 0.13 x 10⁹ dynes/cm²).

Tread cap 26 comprises a polymer blend that has a 300% modulus of 8 to 11 MPa, a tensile strength at break of 15 to 20 MPa, an elongation at break of 420 to 530%, RT Rebound of 45 to 54, a tan delta at 10% strain and 100° C of 0.090 to 0.12, G' at 1% strain of 990 to 1350 KPa, a G' at 50% strain of 540 to 700 KPa, E' of 6 x 10⁻⁴ to 8 x 10⁵ kg/m² (0.06 to .08 x 10⁹ dynes/cm²).

The tread cap 26 and tread base 24 are preferably coextruded.

The elastomer compositions are vulcanized at elevated temperature and pressure.

In addition to the complementary properties provided by tread base 24 and tread cap 26, the design of the tread enhances the desired properties of the tire.

The tread is designed so that tread depth in shoulder 28 of the tread is 84% to 100%, preferably 84% to 92% of the tread depth of center rib 42, the maximum tread depth in the tire. The reduced tread depth in the shoulder area increases the stiffness of the shoulder elements to provide less wear and better handling properties. In addition, a circumferential scribe line 38 separates shoulder blocks 30 into an axially outer portion 30a and an axially inner portion 30b. Scribe line 38 is located such that inner portion 30b comprises 10% to 40% of the shoulder block width as measured from the shoulder 28 of the tire to the circumferential groove 70, and the scribe line 38 has a depth of 8% to 16% of the maximum tread depth, and a width of 2% to 5% of the shoulder block width.

In the illustrated embodiment, the width and depth of scribe line 38 are both 1 mm.

The circumferential scribe line 38 provides a venting effect for the lateral sipes in the shoulder of the tire. When sipes open and close during rotation of a tire, they alternately fill up with and expel air. When the air is expelled, it sometimes causes a noticeable hissing noise, because the air is expelled through a closing sipe. The scribe line provides a larger opening for air to escape, to help prevent this hissing noise.

The scribe line also provides an additional edge for wet and snow traction in the first 8 to 10 thousand miles of use on the tire.

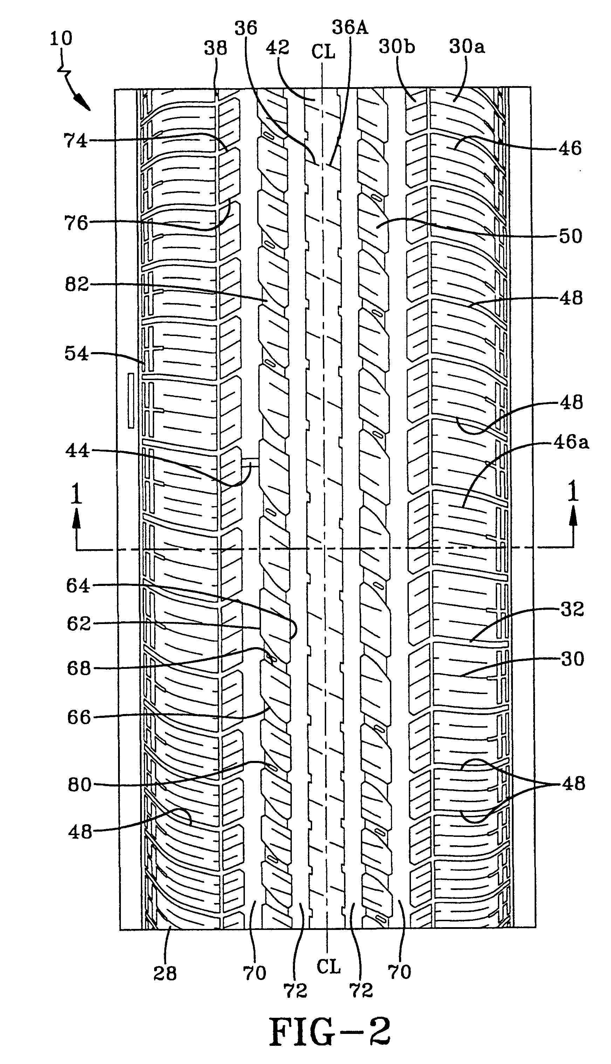

Referring now to Fig. 2, sipes 46 in the tire 10 are located and angled to equalize the stiffness of the tread elements, and to maximize the lateral stiffness of the elements. To equalize the stiffness of tread elements, it is sometimes necessary, in the larger lugs in the pitch sequence of the tire, to include an extra sipe 46a, to minimize the difference in the length of solid rubber portions in the elements. The lengths of the sipes can be varied to further implement this equalization of lug stiffness.

Any pitching sequence which may be suitable for a particular purpose can be used in the tire of the invention.

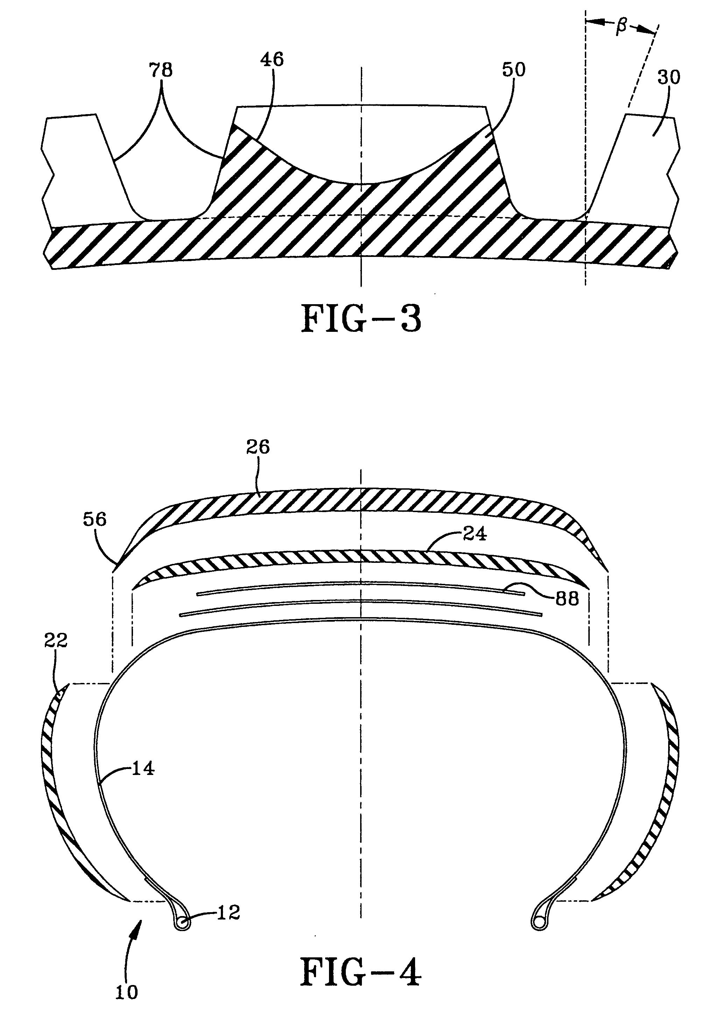

With reference now to Fig. 3, in the illustrated embodiment all sipes 46 in shoulder blocks 30 and intermediate blocks 50 have a tapered depth such that, as the tread wears, the length of sipes 46 get shorter.

Since the sipes get smaller as the tire wears, and the shoulder lugs get stiffer as the tread depth is reduced, the scribe line is not necessary after the first 8 to 10 thousand miles of use.

Referring again to Fig. 2, to improve traction in a partially worn tire, additional sipes evolve as the tread wears. The evolving additional sipes are provided by including voids or cuts 80 in subsurface land areas such as tie bars 82, whereby when the tread is worn, new sipes open up. The subsurface voids or cuts 80 are spaced around the tire to provide an even distribution of new sipes in the partially worn tire. In the illustrated embodiment, the tie bars 82 are at the same depth in the tread as the treadwear indicators 44.

Center rib 42 has a width comprising 10.5% to 15% of the tread width of the tire, wherein the tread width is measured shoulder to shoulder on the tire, and its relatively wide width provides handling stability and quiet ride. It was found in earlier versions of the tire of the invention (the control tire mentioned in the examples), that a narrower center rib with continuous angled sipes caused slipping in the braking test, and the center rib was shown to bend and deflect when the tire rotated through the footprint. The wider center rib, and off-set non-continuous sipes 36,36a in the center rib apparently eliminated this problem.

Lateral grooves in the shoulder of the tread have an angle of 75 to 90 degrees, preferably 75 to 90 degrees with respect to the center line (CL) of the tread and all said lateral grooves vary from each other in width less than 25%. Intermediate lugs 50 comprise the shape of a trapezoid wherein the bases 62, 64 of the trapezoid have a length within 20%, preferably 10%, of each other and delineate one side each of the circumferential grooves 70 and 72 of the tire. The two sides 66, 68 of the trapezoidal shape have different angles with respect to the center line (CL) of the tread, but are oriented in substantially the same direction. For example, in the illustrated embodiment, the side 66 lug wall of intermediate lug 50 has an angle of 30° to 70°, preferably 45° with respect to the CL of the tread and side 68 lug wall of intermediate lug 50 has an angle of 20° to 50°, preferably 30° with respect to the CL of the tread. It is believed that the side with the larger, more acute wall angle provides for transitional loading of the intermediate lugs into the footprint which provides for a quieter ride. The side with the smaller lug wall angle provides for greater gripping ability of the tire when braking since most of the full width of the edge of the lug is in contact with the road surface at the same instant during braking, and substantially the full width of the lug supports the braking action.

Early embodiments of the tire of the invention showed steering and handling looseness. Such instability in a tire may be an indication that there is too much flexibility in the central region of the tire. In an effort to solve the steering and handling problems, tie bars 82 were added between the intermediate lugs 50 to improve the stability in the central region of the tire. This apparently solved the steering and handling problems.

Shoulder lugs 30 bend at an angle that complements the smaller angled side 68 of intermediate blocks 50, i.e. the inner portion 30b of the shoulder blocks 30 closest to the CL of the tire have a lateral groove wall angle that is opposite the angles of the sides of the intermediate lugs. For example, when the sides of the intermediate lugs are oriented at an angle of 25° to 80°, the lateral groove walls 74, 76 of the inner portion 30b of the shoulder blocks 30 are oriented at an angle of -30° to -50° with respect to the CL.

In a non-directional tire, as illustrated, opposite sides of the tire (as separated by the CL) will have opposite orientation of side 66, 68 and inner portion 30b lateral groove wall 74, 76 angles, as well as lateral groove 32 angles between the shoulder blocks.

The angling of sipes 46 complements the orientation of a particular lug element to maximize the stiffness equalization discussed above. For example, where the lateral groove walls 74,76 of shoulder portion 30b are at an angle of -30° to -50°, sipes in this tread element are at a similar angle so that each portion of the tread element is of a similar size.

It is believed that the location and angle of the sipes, especially in the shoulder region of the tire, increase the ride comfort and help reduce heel and toe wear on the tread elements.

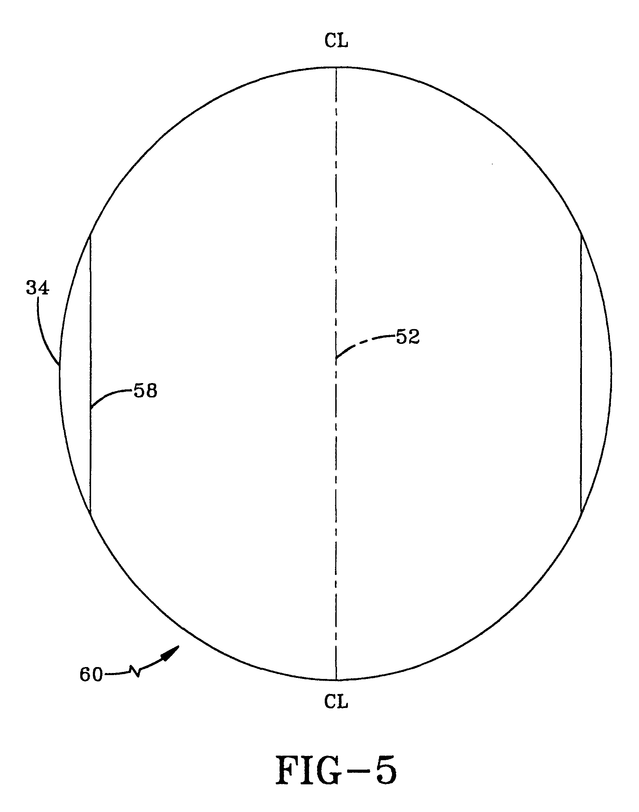

With reference to Fig. 4, to provide additional traction in the shoulder region, miniwings 56 are smaller than those provided on most tires and are just large enough to cover tread base 24 to prevent exposure to ozone. As is conventional in the art, miniwings 56 comprise a soft, tacky compound which is particularly suited to seal and stick to the base compound and the sidewall, and is extruded with the tread. Since the miniwings 56 are made smaller, additional tread cap compound 26 is available for wrapping over the shoulder area of the tire for better wear and traction when the tire rolls over on the shoulder during cornering.

In addition, referring to Fig. 2, traction rectangle 54 provides grip in the tread when the tire rolls over shoulder 28 in cornering maneuvers by providing gripping edges in the shoulder of the tire. Traction rectangle 54 is high enough in shoulder 28 to comprise tread cap rubber 26 so that the portion of the tread comprising traction rectangle 54 has the same wear properties and traction properties as the tread.

To provide additional stability and smoother ride, tread wear indicators 44 may optionally be provided in a staggered arrangement within the circumferential and lateral grooves.

With reference to Figs. 1 and 3, circumferential groove walls 78 have an angle β of 5° to 20°, preferably 7°, with respect to a line perpendicular to the tread surface. The angled circumferential groove walls make it easier for the tire to expel mud and snow from the grooves during running of the tire and provide additional void volume in the groove to help prevent hydroplaning, while providing a stable lug by providing a broad lug base.

With reference now to Fig. 5, in the illustrated embodiment, the tire of the invention has a generally oval footprint 60 with a footprint factor of 1.3 or less at standard inflation and load. The footprint factor is defined as the ratio of the footprint length 52 at the center of the tire to the footprint length 58 at the shoulder of the tire. The footprint length 58 at the shoulder of the tire is defined by a line parallel to the CL at a point located at 80% of the distance from the CL to the axial edge 34 of the footprint. It is believed that a footprint factor of 1.0 to 1.3 will be suitable for use in the invention. The particular footprint factor used is believed to provide optimal wear and handling properties for the tire.

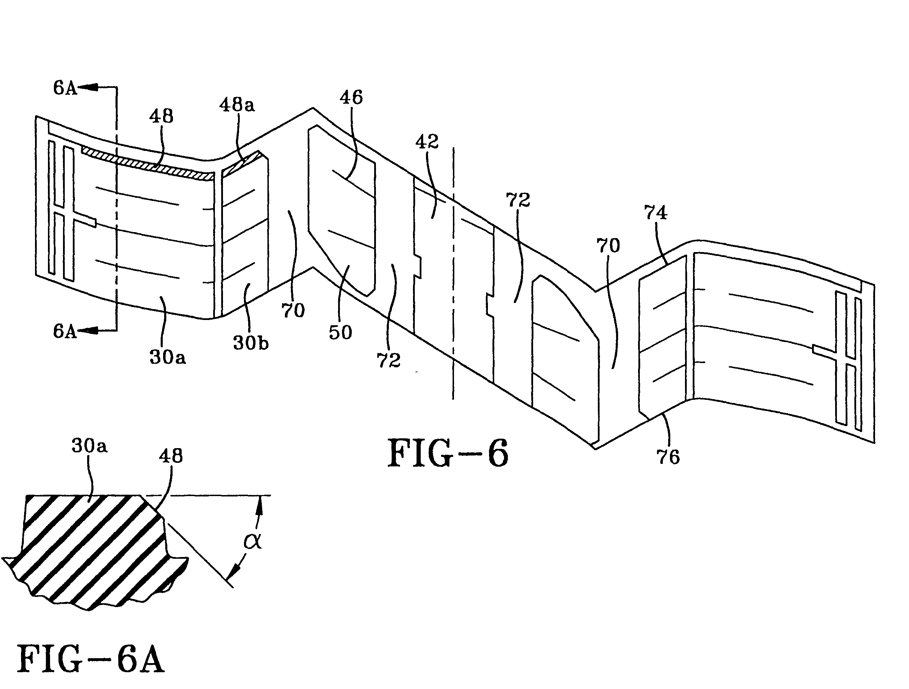

With reference again to Fig. 2 and to Fig. 6, in the illustrated embodiment, at least one edge of blocks 30 along lateral grooves 32 have a chamfer 48. In the illustrated embodiment, chamfer 48 is on one side of shoulder block 30. Chamfer 48 provides a means for controlling the RSAT (residual self-aligning torque) of the tire.

"Residual cornering force" (RCF) and "residual self aligning torque" (RSAT) are commonly monitored aspects of tire performance.

The natural pull caused by the angle of the cords in the top belt 88 may be suitable for some automobiles, but will be too much or too little for other automobiles depending on their size and suspension systems. Chamfer 48 changes RSAT in one direction when placed on a lug angled in one direction, and changes RSAT in the opposite direction when placed on a lug angled in the opposite direction.

Preferably, the chamfer 48 does not extend to the full depth of the tread element 30. The tread elements 30 when new have a more flexible structure than when worn, which is believed to be a factor which can effect the RCF or RSAT of a new tire dramatically. As the tire wears the effect of RCF or RSAT as it relates to tread element flexibility is reduced. As the tread elements 30 wear down, the chamfer portion 48 disappears. As this occurs, the rate of tread wear decreases.

The angle α that the chamfer surface of the insert makes with the tire mold's surface is chosen for each tire application, but is generally between 40 degrees and 85 degrees. Inserts can be utilized in any portion of the tire mold, and inserts can be used in multiple recesses of a tire mold at the same time.

Different manufacturers have different specifications for RSAT, and the placement and size of chamfer 48 can be used as a method of controlling the RSAT of a tire. The chamfer can be changed by grinding, and new molds are not required to meet the specifications of different manufacturers.

Fig. 6 shows a tire tread 16 with chamfered edges 48 on tread element 30.

By experimentation, it has been found that chamfering the intermediate lugs or the center rib has little effect on RSAT. In the particular tread design shown in Figs. 2 and 6, it has been found that chamfering the lateral edges of shoulder portion 30a provides a negative shift in RSAT and chamfering the lateral edges of shoulder portion 30b provides a positive shift in RSAT. This is because the shoulder portions 30a on both sides of the tire are angled in the same direction, and shoulder portions 30b on both sides of the tire are angled in the same direction, but the angles are opposite as between shoulder portions 30a and 30b.

In the tire illustrated in the examples, the construction and the tread design is relatively neutral for RSAT, about -20N (i.e. the tire tends to pull the car to the left with a 20 newton force). In the vehicle used for testing the tires, the suspension system requires that the tires exhibit a force of -60N to provide the best handling and ride properties for the vehicle. By providing a chamfer on the leading edge of shoulder portion 30a on one axial side of the tire, and a chamfer on the trailing edge of shoulder portion 30a on the other axial side of the tire, the tire of the invention exhibited a RSAT of -60N.

In the illustrated embodiment, chamfers 48 are placed on the leading edge of a lug on one shoulder and the trailing side of the lug on the opposite shoulder for a distance that comprises 30% to 80% of the length of shoulder portion 30a. The illustrated chamfer is at an angle of 45 degrees and is 1mm deep and 1mm wide. Those skilled in the art will recognize that both edges may be chamfered on the same tread element, and that all trailing or all leading edges of the tread elements may be chamfered, depending on the RSAT requirements of the tire.

The invention is further illustrated with reference to the following example.

### EXAMPLE

This example illustrates subjective results for noise, ride, handling and wet handling by a professional driver in various road conditions for a molded control tire and three carved versions of test tires.
Size: P195/70R14
Code: E19 Subjective Noise, Ride, and Handling-Toyota
General Test Details
1. Wheels: 5.5 x 14 steel
2. Inflation: 200 kPa (30 psi)
3. Load: Curb + 2 (+1 for handling)

### Conclusions

Tire Constructions Tested:

| | Design | | Compound |
|---|---|---|---|
| Control | 1 | Molded | A |
| Set 2 | W | Carved | C |
| Set 3 | B | Carved | C |
| Set 4 | 2 | Carved | C |

### Test Set Performance Relative to Control

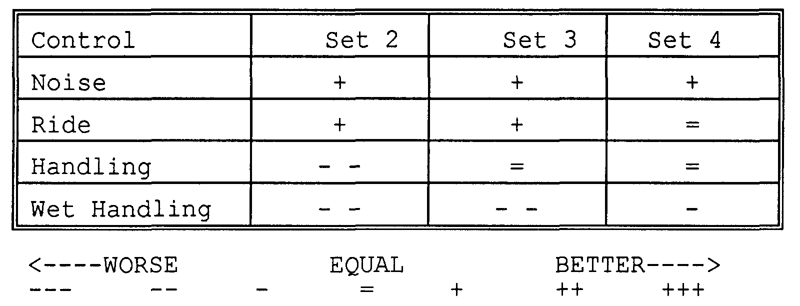

Improved noise and ride properties generally indicate a better tread design, and the table shows that sets 2, 3 and 4 apparently had better tread designs than the control tire.

For handling and wet handling properties the table shows set 4 is best overall and set 4 apparently has the best tread pattern.
- Comments -: Ride
- Control -: Tires had moderate buru-buru feel on smooth road. Gotsu-gotsu was mild. Rough road had moderate shock, but was good for amplitude.
Impacts OK for amp, but sharp in feeling.
- Set 2 -: Close to control, buru-buru a little less, and the impacts felt more rounded.
- Set 3 -: Buru-buru close to controls, otherwise between the C control and set 2.
- Set 4 -: Very close to controls for all surfaces.

The results confirm that test tires of sets 2 and 3 had better ride feel than the control and set 4.
- Comments -: Noise
- Control -: Tires had strong sizzle noise, both when running at constant speed and when coasting down. Slight howls and whines below 40 mph with low freq, oscillating howl below 20 mph. Corner sizzle is very loud turning left, quiet turning right. Impacts sound moderate.
- Set 2 -: Pattern noise has less howls at lower speeds. Sizzle seems to be higher freq than control. Good for corner noise - more balanced between right and left turn, lower amp. Squeal noise is more sand sounding verses actual squeal sounding.
- Set 3 -: Pretty close to set 2 except sizzle noise has freq closer to control. Squeal close to set 2.
- Set 4 -: Very close to set 3 except road noise is less amp. Impacts sound closer to control level. Squeal close to set 2.

The results confirm that the carved test tires, especially set 4, had better noise properties than the control.
- Comments -: Dry Handling
- Control -: On center feel has fair feedback with moderate hole. Lane change has slight yaw delay between front and rear. Feedback is light, with OK grip during lane change. Cornering is moderate understeer with light feedback. Tuck-in is slight, with a hint of oversteer. Braking in turn causes oversteer, slow and controllable. Grip level slightly low.
- Set 2 -: Tires had on-center similar to control. Lane change felt more sloppy than control, with slower response and more rear slide than control. Cornering had more oversteer, quicker O/S when braking in turn.
- Set 3 -: Tires were between set 2 and control, closer to control. Rear slide was slightly more than control.
- Set 4 -: More on-center than control, with slightly smaller hole. Very similar to set 3 otherwise.

- Comments -: Wet Handling
- Control -: Moderate understeer with fair feedback. Response is slightly dull feeling. Braking stability is OK. Grip level is OK.
- Set 2 -: Very slippery feeling tires. Stronger U/S with less feedback and less grip. More oversteer during slalom. Tires slide very easily while braking in straight line.
- Set 3 -: Tires were more responsive with more feedback. Grip slightly better than set 2.
- Set 4 -: These tires were closer to control level, but not quite there. Understeer was a little stronger than control, braking traction slightly less than control.

## Claims

1. A pneumatic tire **(10)** comprising a pair of parallel annular beads **(12),** at least one radial carcass ply **(14)** wrapped around said beads, a tread **(16)** radially above a crown portion **(18)** of said tire, and sidewalls **(22)** disposed between said tread and said beads, wherein said tread comprises a tread base (24) and a tread cap **(26) characterized in that** the tread base rubber has a 300% modulus of 16 to 19 MPa, a tensile strength at break of 17.5 to 22.5 MPa, elongation at break of 270 to 435%, RT (room temperature) rebound of 57 to 64, a tan delta at 10% strain of 0.075 to 0.11, G' at 1% strain of 1770 to 2070 KPa, a G' at 50% strain of 790 to 1010 KPa, and an E' of 10⁻³ to 1,3 x 10⁶ kg/m² (0.1 to 0.13 x 10⁹ dynes/cm²), and said tread cap rubber has a 300% modulus of 8 to 11 MPa, a tensile strength at break of 15 to 20 MPa, an elongation at break of 420 to 530%, RT Rebound of 45 to 54, a tan delta at 10% strain of 0.090 to 0.12, G' at 1% strain of 990 to 1350 KPa, a G' at 50% strain of 540 to 700 KPa, E' of 6 x 10⁻⁴ to 8 x 10⁵ kg/m² (0.06 to .08 x 10⁹ dynes/cm²), and wherein the tread depth in the shoulder of the tread is about 84% to 100% of the maximum tread depth and wherein lateral grooves **(32)** in the shoulder **(28)** of the tire have an angle of 75 to 90 degrees with respect to the center line (CL) of the tread and all said lateral grooves vary from each other in width less than 25%, and walls **(78)** of circumferential grooves **(70,72)** in said tread have an angle **(β)** of 5 to 20 degrees with respect to a line perpendicular to the tread surface, and wherein said carcass is shaped in a mold to have a footprint factor of less than 1.3 at standard inflation and load.

2. The tire of claim 1 characterized by a circumferential scribe line **(38)** dividing a shoulder block **(30)** into an inner portion **(30b)** and an outer portion **(30a)** wherein the inner portion comprises 10% to 40% of the width of a shoulder block as measured from an adjacent circumferential groove **(70)** to a shoulder **(28)** of the tire, said scribe line having a depth of 8% to 16% of the maximum tread depth.

3. The tire of claim 1 or 2 characterized by said tread having a center rib **(42)** having a width of 10.5% to 15% of the tread width.

4. The tire of any of claims 1-3 characterized by sipes **(46)** with tapered depth in shoulder blocks **(30)** and intermediate blocks **(50).**

5. The tire of any of claims 1-4 characterized by intermediate blocks **(50)** or ribs being point symmetric with respect to points located on the centerline (CL).

6. The tire of any of claims 1-5 characterized by shoulder blocks **(30)** being chamfered on at least one lateral groove edge.

7. The tire of any of claims 1-6 **characterized in that** all lateral grooves **(32)** between the shoulder blocks **(30)** have the same width.

8. A pneumatic tire **(10)** comprising a pair of parallel annular beads **(12),** at least one radial carcass ply **(14)** wrapped around said beads, a tread **(16)** radially above a crown portion **(18)** of said tire, and sidewalls **(22)** disposed between said tread and said beads, wherein said tread has lateral grooves **(32),** characterized by said lateral grooves **(32)** having an angle of 75 to 90 degrees with respect to the center line (CL) of the tread **(16)** and all said lateral grooves **(32)** vary in width from each other less than 25%, and a circumferential scribe line **(48)** divides a shoulder block **(30)** into an axially inner portion **(30b)** and an axially outer portion **(30a)** wherein the inner portion comprises 10% to 40% of the width of a shoulder block as measured from an adjacent circumferential groove **(10)** to a shoulder **(28)** of the tire, and lateral grooves **(32)** between said inner portion **(30b)** have an angle of -30 to -50 degrees with respect to the center line (CL) of the tread, and wherein said carcass is shaped in a mold to have a footprint factor of less than 1.3 at standard inflation and load, and wherein at least some tread elements **(30)** defined by said lateral grooves have a chamfer **(48)** on at least one side thereof on at least a portion thereof in a shoulder region of said tread, the placement of chamfers being determined by the RSAT requirements of the tire.

9. The tire of claim 8 characterized by chamfers **(48)** on said inner portion providing a bias to RSAT that is opposite in direction to the bias provided by chamfers on said outer portion.

## Patentansprüche

1. Luftreifen (10) mit zwei parallelen, ringförmigen Wülsten (12), mindestens einer radialen Karkaßlage (14), die um die Wülste herumgewikkelt ist, einem Laufstreifen (16) radial über einem Kronenabschnitt (18) des Reifens und Seitenwänden (22), die zwischen dem Laufstreifen und den Wülsten angeordnet sind, wobei der Laufstreifen ein Laufstreifenunterteil (24) und ein Laufstreifenoberteil (26) umfaßt, **dadurch gekennzeichnet**, daß der Laufstreifenunterteilgummi aufweist: einen 300%-Modul von 16 bis 19 MPa, eine Bruchzugfestigkeit von 17,5 bis 22,5 MPa, eine Bruchdehnung von 270 bis 435 %, einen RT(Raumtemperatur)-Rückprall von 57 bis 64, ein Tan Delta bei 10 % Dehnung von 0,075 bis 0,11, G' bei 1 % Dehnung von 1770 bis 2070 KPa, eine G' bei 50 % Dehnung von 790 bis 1010 KPa und einen E' von 10⁻³ bis 1,3 x 10⁶ kg/m² (0,1 bis 0,13 x 10⁹ Dyn/cm²), und daß der Laufstreifenoberteilgummi aufweist: einen 300%-Modul von 8 bis 11 MPa, eine Bruchzugfestigkeit von 15 bis 20 MPa, eine Bruchdehnung von 420 bis 530 %, einen RT-Rückprall von 45 bis 54, ein Tan Delta bei 10 % Dehnung von 0,090 bis 0,12, G' bei 1 % Dehnung von 990 bis 1350 KPa, eine G' bei 50 % Dehnung von 540 bis 700 KPa, einen E' von 6 x 10⁻⁴ bis 8 x 10⁵ kg/m² (0,06 bis 0,08 x 10⁹ Dyn/cm²), und wobei die Laufstreifentiefe in der Schulter des Laufstreifens ungefähr 84 % bis 100 % der maximalen Laufstreifentiefe beträgt, und wobei Querrillen (32) in der Schulter (28) des Reifens einen Winkel von 75 bis 90 Grad in bezug auf die Mittellinie (CL) des Laufstreifens aufweisen, und die Breiten aller Querrillen zueinander um weniger als 25 % schwanken, und Wände (78) von Umfangsrillen (70, 72) im Laufstreifen einen Winkel (β) von 5 bis 20 Grad in bezug auf eine Linie aufweisen, die senkrecht zur Laufstreifenoberfläche steht, und wobei die Karkasse in einer Form derart geformt wird, daß sie einen Aufstandsflächenfaktor von weniger als 1,3 bei normalem Fülldruck und normaler Last aufweist.

2. Reifen nach Anspruch 1, gekennzeichnet durch eine Umfangseinkerbungslinie (38), die einen Schulterblock (30) in einen inneren Abschnitt (30b) und einen äußeren Abschnitt (30a) unterteilt, wobei der innere Abschnitt 10 % bis 40 % der Breite eines Schulterblocks umfaßt, wie von einer benachbarten Umfangsrille (70) zu einer Schulter (28) des Reifens gemessen, wobei die Einkerbungslinie eine Tiefe von 8 % bis 16 % der maximalen Laufstreifentiefe aufweist.

3. Reifen nach Anspruch 1 oder 2, **dadurch gekennzeichnet**, daß der Laufstreifen eine Mittelrippe (42) mit einer Breite von 10,5 % bis 15 % der Laufstreifenbreite aufweist.

4. Reifen nach einem der Ansprüche 1 bis 3, gekennzeichnet durch Einschnitte (46) mit einer sich verjüngenden Tiefe in Schulterblöcken (30) und Zwischenblöcken (50).

5. Reifen nach einem der Ansprüche 1 bis 4, **dadurch gekennzeichnet**, daß Zwischenblöcke (50) oder Rippen punktsymmetrisch in bezug auf Punkte sind, die auf der Mittellinie (CL) angeordnet sind.

6. Reifen nach einem der Ansprüche 1 bis 5, **dadurch gekennzeichnet**, daß Schulterblöcke (30) an mindestens einer Querrillenkante angefast sind.

7. Reifen nach einem der Ansprüche 1 bis 6, **dadurch gekennzeichnet**, daß alle Querrillen (32) zwischen den Schulterblöcken (30) die gleiche Breite aufweisen.

8. Luftreifen (10) mit zwei parallelen, ringförmigen Wülsten (12), mindestens einer radialen Karkaßlage (14), die um die Wülste herumgewikkelt ist, einem Laufstreifen (16) radial über einem Kronenabschnitt (18) des Reifens und Seitenwänden (22), die zwischen dem Laufstreifen und den Wülsten angeordnet sind, wobei der Laufstreifen Querrillen (32) aufweist, **dadurch gekennzeichnet**, daß die Querrillen (32) einen Winkel von 75 bis 90 Grad in bezug auf die Mittellinie (CL) des Laufstreifens (16) aufweisen, und daß die Breiten aller Querrillen (32) zueinander um weniger als 25 % schwanken, und daß eine Umfangseinkerbungslinie (48) einen Schulterblock (30) in einen axial inneren Abschnitt (30b) und einen axial äußeren Abschnitt (30a) unterteilt, wobei der innere Abschnitt 10 % bis 40 % der Breite eines Schulterblocks umfaßt, wie von einer benachbarten Umfangsrille (10) zu einer Schulter (28) des Reifens gemessen, und die Querrillen (32) zwischen dem inneren Abschnitt (30b) einen Winkel von -30 bis -50 Grad in bezug auf die Mittellinie (CL) des Laufstreifens aufweisen, und wobei die Karkasse in einer Form derart geformt ist, daß sie einen Aufstandsflächenfaktor von weniger als 1,3 bei normalem Fülldruck und normaler Last aufweist, und wobei mindestens einige Laufstreifenelemente (30), die durch die Querrillen definiert sind, eine Fase (48) auf mindestens einer ihrer Seiten an mindestens einem ihrer Abschnitte in einem Schulterbereich des Laufstreifens aufweisen, wobei die Anordnung der Fasen durch die RSAT-Erfordernisse des Reifens bestimmt ist.

9. Reifen nach Anspruch 8, **dadurch gekennzeichnet**, daß die Fasen (48) am inneren Abschnitt dem RSAT eine Vorspannung verleihen, deren Richtung entgegengesetzt zu der Vorspannung ist, die durch die Fasen am äußeren Abschnitt geliefert wird.

## Revendications

1. Bandage pneumatique (10) comprenant une paire de talons annulaires parallèles (12), au moins une nappe de carcasse radiale (14) enveloppant lesdits talons, une bande de roulement (16) disposée en position radiale par-dessus une portion de couronne (18) dudit bandage pneumatique, et des flancs (22) disposés entre ladite bande de roulement et lesdits talons, dans lequel ladite bande de roulement comprend une base de bande de roulement (24) et un recouvrement de bande de roulement (26), **caractérisé en ce que** le caoutchouc de la base de bande de roulement possède un module à 300 % de 16 à 19 MPa, une résistance ultime à la traction de 17,5 à 22,5 MPa, un allongement à la rupture de 270 à 435 %, un rebond à la température ambiante (RT) de 57 à 64, une valeur tan delta à une déformation de 10 % de 0,075 à 0,11, une valeur G' à une déformation de 1 % de 1770 à 2070 KPa, une valeur G' à une déformation de 50 % de 990 à 1010 KPa et une valeur E' de 10⁻³ à 1,3 x 10⁶ kg/m² (0,1 à 0,13 x 10⁹ dynes/cm²), et ledit caoutchouc du recouvrement de la bande de roulement possède un module à 300 % de 8 à 11 MPa, une résistance ultime à la traction de 15 à 20 MPa, un allongement à la rupture de 420 à 530 %, un rebond RT de 45 à 54, une valeur tan delta à une déformation de 10 % de 0,090 à 0,12, une valeur G' à une déformation de 1 % de 990 à 1350 KPa, une valeur G' à une déformation de 50 % de 540 à 700 KPa et une valeur E' de 6 x 10⁻⁴ à 8 x 10⁵ kg/m² (0,06 à 0,08 x 10⁹ dynes/cm²), et dans lequel la profondeur de la bande de roulement dans l'épaulement de la bande de roulement représente d'environ 84 % à 100 % de la profondeur maximale de la bande de roulement, et dans lequel des rainures latérales (32) dans l'épaulement (28) du bandage pneumatique forment un angle de 75 à 90 degrés par rapport à la ligne médiane de la bande de roulement et toutes lesdites rainures latérales varient l'une par rapport à l'autre en ce qui concerne leur largeur d'une valeur inférieure à 25 % et les parois (78) des rainures circonférentielles (70, 72) dans ladite bande de roulement forment un angle bêta de 5 à 20 degrés par rapport à une ligne perpendiculaire à la surface de la bande de roulement, et dans lequel ladite carcasse est façonnée dans un moule pour posséder un facteur d'empreinte inférieure à 1,3 dans des conditions de charge et de gonflage nominales.

2. Bandage pneumatique selon la revendication 1, caractérisé par une ligne gravée circonférentielle (38) divisant un bloc d'épaulement (30) en une portion interne (30b) et en une portion externe (30a), dans lequel la portion interne comprend de 10 % à 40 % de la largeur d'un bloc d'épaulement, comme mesuré depuis une rainure circonférentielle adjacente (70) jusqu'à un épaulement (28) du bandage pneumatique, ladite ligne gravée possédant une profondeur représentant de 8 % à 16 % de la profondeur de bande de roulement maximale.

3. Bandage pneumatique selon la revendication 1 ou 2, caractérisé par le fait que ladite bande de roulement possède une nervure centrale (42) dont la largeur représente de 10,5 % à 15 % de la largeur de la bande de roulement.

4. Bandage pneumatique selon l'une quelconque des revendications 1 à 3, caractérisé par des lamelles (46) comportant une profondeur conique dans des blocs d'épaulement (30) et dans des blocs intermédiaires (50).

5. Bandage pneumatique selon l'une quelconque des revendications 1 à 4, caractérisé par des blocs intermédiaires (50) ou par des nervures manifestant une symétrie ponctuelle par rapport à des points disposés sur la ligne médiane.

6. Bandage pneumatique selon l'une quelconque des revendications 1 à 5, caractérisé par des blocs d'épaulement (30) chanfreinés sur au moins un bord de rainure latérale.

7. Bandage pneumatique selon l'une quelconque des revendications 1 à 6, **caractérisé en ce que** toutes les rainures latérales (32) entre les blocs d'épaulement (30) possèdent la même largeur.

8. Bandage pneumatique (10) comprenant une paire de talons annulaires parallèles (12), au moins une nappe de carcasse radiale (14) enveloppant lesdits talons, une bande de roulement (16) disposée en position radiale par-dessus une portion de couronne (18) dudit bandage pneumatique, et des flancs (22) disposés entre ladite bande de roulement et lesdits talons, dans lequel ladite bande de roulement possède des rainures latérales (32), caractérisé par le fait que lesdites rainures latérales (32) forment un angle de 75 à 90 degrés par rapport à la ligne médiane de la bande de roulement (16), et toutes lesdites rainures latérales (32) varient en ce qui concerne leur largeur l'une par rapport à l'autre d'une valeur inférieure à 25 %, et une ligne gravée circonférentielle (48) divise un bloc d'épaulement (30) en une portion interne (30b) en direction axiale et une portion externe (30a) en direction axiale, dans lequel la portion interne comprend de 10 % à 40 % de la largeur d'un bloc d'épaulement, tel que mesuré depuis une rainure circonférentielle adjacente (10) jusqu'à un épaulement (28) du bandage pneumatique, et des rainures latérales (32) entre ladite portion interne (30b) forment un angle de -30 à -50 degrés par rapport à la ligne médiane de la bande de roulement, et dans lequel ladite carcasse est façonnée dans un moule pour posséder un facteur d'empreinte inférieur à 1,3 dans des conditions de gonflage et de charge nominales, et dans lequel au moins un certain nombre des éléments de bande de roulement (30) définis par lesdites rainures latérales possèdent un chanfrein (48) sur au moins un de leur côté sur au moins une de leur portion dans une région d'épaulement de ladite bande de roulement, l'emplacement des chanfreins étant déterminé par les exigences de la valeur RSAT du bandage pneumatique.

9. Bandage pneumatique selon la revendication 8, caractérisé par des chanfreins (48) sur ladite portion interne procurant un biais à la valeur RSAT dont la direction est opposée à celle du biais procuré par les chanfreins sur ladite portion externe.
